# EUROPEAN PATENT SPECIFICATION

(11) **EP 0 352 757 B1**
(45) Date of publication and mention of the grant of the patent: **18.09.1996**
(21) Application number: 89113725.9
(22) Date of filing: 25.07.1989
(51) Int. Cl.: G11B 5/70, G11B 5/708, G11B 5/702

(54) **Magnetic recording medium**
Magnetischer Aufzeichnungsträger
Support d'enregistrement magnétique

(30) Priority: 26.07.1988 JP 186544/88; 26.07.1988 JP 186545/88
(43) Date of publication of application: 31.01.1990
(73) Proprietor: KONICA CORPORATION, Tokyo 160 (JP)
(72) Inventor: Goto, Narito, Hino-shi Tokyo (JP); Matsuda, Atsuko, Hino-shi Tokyo (JP)
(74) Representative: Türk, Gille, Hrabal, Leifert

(56) References cited:
- EP-A- 0 273 175
- US-A- 4 684 572
- US-A- 4 728 569
- PATENT ABSTRACTS OF JAPAN vol. 12, no. 431 (P-786)(3278) 15 November 1988, & JP-A- 63 164017 (KAO CORP.) 07 July 1988,
- PATENT ABSTRACTS OF JAPAN vol. 12, no. 439 (P-788) 18 November 1988,
- PATENT ABSTRACTS OF JAPAN vol. 12, no. 422 (P-783) 09 November 1988, & JP-A- 63 157315 (FUJI PHOTO FILM CO LTD) 03 June 1988,
- PATENT ABSTRACTS OF JAPAN vol. 12, no. 431 (P-786)(3278) 15 November 1988, & JP-A- 63 164018 (KAO CORP.) 07 July 1988,
- PATENT ABSTRACTS OF JAPAN vol. 12, no. 345 (P-759) 16 September 1988, & JP-A- 63 102035 (FUJI PHOTO FILM CO LTD) 06 May 1988,
- PATENT ABSTRACTS OF JAPAN vol. 12, no. 345 (P-759) 16 September 1988, & JP-A- 63 102032 (FUJI PHOTO FILM CO LTD) 06 May 1988,
- PATENT ABSTRACTS OF JAPAN vol. 12, no. 339 (P-757) 12 September 1988,
- PATENT ABSTRACTS OF JAPAN vol. 12, no. 415 (P-781)(3262) 04 November 1988, & JP-A- 63 152021 (TOSHIBA CORP.) 24 June 1988,

## Description

### Field of the Invention

This invention relates to a magnetic recording medium and, particularly, to a magnetic recording medium which is comprised of ferromagnetic powder excellent in dispersibility and dispersion stability, and is superb in electromagnetic conversion characteristics and running durability.

### Background of the Invention

Fundamentally, magnetic recording medium each comprise a non-magnetic support and a magnetic layer containing ferromagnetic powder. They are so constructed as to provide the magnetic layer onto the non-magnetic support. Also, the ferromagnetic powder is, generally, so dispersed in the magnetic layer as to bond to the magnetic layer with the aid of a binder.

In the magnetic recording media having such construction as mentioned above and, particularly in magnetic recording media for VTR use, the magnetic layer thereof contains carbon black which plays the important roles for preventing static, shielding from light, and keeping runnability.

In the meantime, it has been desired nowadays to make available a magnetic recording medium capable of performing a high density recording operation, and there have been some attempts to make ferromagnetic powder more finer and more ferromagnetic.

When making ferromagnetic powder be more finer and more ferromagnetic, the cohesion of ferromagnetic powder to each other is enhanced and, resultingly, the dispersibility of ferromagnetic powder is lowered. This only incurs such an inconvenience that a high density recording is hindered from operating.

On the other hand, the finer the ferromagnetic powder is, the more the surface of a magnetic layer is smoothed. This makes the surface of the magnetic layer be liable to stick to a magnetic head and, resultingly, incurs such a trouble that the running durability of a recording medium is lowered by the scratches on the surface of the magnetic layer, the edge damages of the recording medium, and so forth. In addition to the above trouble, the recording medium becomes liable to running unevenness. This results in the deterioration of the electromagnetic conversion characteristics of the recording medium.

Accordingly, for solving the above-mentioned inconveniences, it has been devised that a running durability may be improved by increasing the carbon black content of a magnetic layer.

When increasing the carbon black content, however, there has been an inconvenience that the dispersibility of ferromagnetic powder is further deteriorated; the running durability may be improved though.

There have been some other attempts that the frictional coefficient of a magnetic layer to a magnetic head is dimished by incorporating various filling agents into the magnetic layer to keep the roughness of the magnetic layer surface.

In these attempts, there have been the inconveniences. For example; the dispersibility of the filler are deteriorated; a magnetic layer is formed without taking the distribution of the particle-size of the filler into consideration; the running durability and electromagnetic conversion characteristics are satisfiable due to the uneven roughness of the magnetic layer surface; and the life of a magnetic head is shortened.

On the other hand, there have also been some proposals for enhancing the runnability of magnetic recording medium, wherein a back-coat layer is provided onto the rear surface of a non-magnetic support.

These methods have been proposed as a measure to counter the inconveniences that a guide-poll or guide-roller scratches the surface of the other side, i.e., the back side, of a non-magnetic support, to which no magnetic layer is provided so that the runnability of a recording medium may seriously be affected.

The above-mentioned back-coat layer has been formed by taking neither the particle-size distribution of the filler nor the surface roughness of the back-coat layer into consideration, as similar as in the conventional magnetic layers. It has hardly been said that the runnability has satisfactorily be improved.

EP-A-0 273 175 describes a magnetic recording medium having a magnetic layer composed mainly of a magnetic powder and a resin binder, wherein the magnetic layer comprises an ester compound and two kinds of carbon black with specific ranges of the average single particles sizes.

In JP-A-63157350 a magnetic recording medium is disclosed which should prevent generation of drop out and obtain improved running durability by incorporating a binder with a specific vinyl chloride copolymer, a polyurethane resin and α-alumina particles in the magnetic layer of the magnetic recording medium.

EP-A-0 264 916 describes suitable binders for the use in magnetic recording media. This binder includes novel vinyl chloride copolymers.

This invention has been achieved by taking the above-mentioned status of things.

### Summary of the Invention

It is an object of the invention to provide a magnetic recording medium which is comprised of ferromagnetic powder being kept in an excellent dispersed state even if the ferromagnetic powder is more ferromagnetized and more finely grained, and is capable of performing a high density recording operation and keeping an excellent running durability.

For solving the above-mentioned problems, the present inventors have devoted themselves to studying repeatedly. Finally, they discovered that a magnetic recording medium can be comprised of a magnetic layer containing both of carbon black having a specific particle-size in addition to its excellent intrinsic characteristics including light-shielding property, antistatic property, and so forth, and a specific binder; that such magnetic recording medium can keep the ferromagnetic powder thereof in an excellent dispersed state even if the powder is more ferromagnetized and more finely grained; and resultingly that the balance of the magnetic characteristics thereof such as an S/N ratio, a squareness ratio, and so forth, and the electromagnetic characteristics, each can be excellent. Thus, the present inventors have achieved this invention.

In short, according to the invention, it is possible to provide a magnetic recording medium comprising a non-magnetic support having thereon a magnetic layer having a surface roughness (Ra) of not more than 0.01 µm and being comprised of a ferromagnetic powder, a first carbon black having an average particle size of 15 to 30 nm (mµ) a second carbon black having an average particle size of not less than 40 nm (mµ) a binder having an anionic functional group, a fatty acid in an amount of from 0.2 to 10 parts by weight and a fatty acid ester in an amount of from 0.1 to 10 parts by weight each per 100 parts by weight of the ferromagnetic powder.

### Detailed Description of the Invention

Now, the magnetic layer and non-magnetic support each constituting a magnetic recording medium of the invention will be detailed in order.

### Magnetic Layer

The magnetic layer is formed in such a manner that at least the above-mentioned first and second carbon black and ferromagnetic powder are each dispersed in a binder. containing the above-mentioned anionic functional group, fatty acid, and fatty acid ester, and the resulting dispersion is arranged onto the non-magnetic support.

The first and second carbon black each have the functions to prevent the magnetic layer from generating static and, on the other hand, to keep light-shielding property, a running durability, and so forth.

To the first and second carbon black, there is no special limitation, provided, they do not hinder the objects of the invention. The carbon black preferably applicable to the invention include, for example, furnace black, thermal black, channel black, and so forth.

In the invention, one of the important points is that the magnetic layer is to contains carbon black having an average particle-size within the range of 15 to 30 nm (mµ) (hereinafter sometimes called the first carbon black) and carbon black having an average particle-size of not smaller than 40 nm (mµ) (hereinafter sometimes called the second carbon black).

The first carbon black made by and under the trade names of the following companies may be given as the examples.

Trade names:
Laven^{R} 5250, 1255, 1250, 1200, 1170, 1040, 1035, 1030, 1020, 890, 825; and
Conductex^{R} 975, SC;
Manufactuer: Columbia Carbon Company

Trade Names:
Black.Pearls L^{R};
Legal^{R} 400, 600, 500R, 500, 330, 99; and
Vulcan^{R} XC-72, P
Manufactuer: Cabbot Company

Trade Names:
CF 9 #50, 52, 45, 44, 40, 32, 30, 4000; and
MA-100, 7, 8, 11
Manufacturer: Mitsubishi Chemical Industries, Ltd.

The second carbon black include the following examples:
Trade Names:
Laven^{R} 14, 16, 22, 410, 420, 430, 450;
Manufacturer: Columbia Carbon Company

Trade Names:
Sterling^{R} NS, V
Manufacturer: Cabbot Company

Trade Names:
HS-100, HS-500
Manufacturer: Denki Kagaku Kogyo K.K.

In the magnetic layer, the compounding proportion of the first carbon black to the second carbon black ( the 1st carbon black / the 2nd carbon black) is within the range of preferably 10/1 to 1/10 and more preferably 2/1 to 1/4.

The binders having the anionic functional group [hereinafter sometimes simply called resin (A)] have a function to make excellent the state where the 1st and 2nd carbon black and ferromagnetic powder of which will be detailed later are dispersed in the binder of a magnetic recording medium of the invention.

The anionic functional groups contained in the resin (A) include, for example, -SO₃M, -OSO₂M, -COOM, 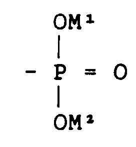 in which M represents one of the atoms of hydrogen, lithium, and sodium, potassium; and M¹ and M² each represent one of the atoms of hydrogen, lithium, potassium, and sodium, or an alkyl group, provided, M¹ and M² may be the same or different from each other.

The resin (A) may be prepared in such a manner that such a resin as a vinyl chloride copolymer, a polyester or a polyurethane is modified in advance and is then introduced thereinto with the anionic functional group.

To be more concrete, resin (A) may be prepared by the condensation, through a dehydrochlorination reaction, of a resin such as a vinyl chloride copolymer, a polyester or a polyurethane and a compound containing an anionic functional group and chlorine in its molecules, such as Cl-CH₂CH₂SO₃M, Cl-CH₂CH₂OSO₂M, Cl-CH₂COOM, 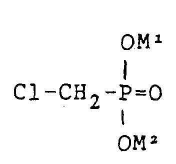 in which M, M¹ and M² are each synonymous with those afore-denoted.

Among those resins (A) prepared as mentioned above, the preferable ones include, for example, those prepared by introducing an anionic functional group into a vinyl chloride copolymer.

The vinyl chloride copolymers, into which the anionic functional group is introduced, include, for example, a vinyl chloride-vinyl acetate-vinyl alcohol copolymer, a vinyl chloride-vinyl propionate-vinyl alcohol copolymer, a vinyl chloride-vinyl acetate-vinyl maleate-vinyl alcohol copolymer, a vinyl chloride-vinyl propionate-vinyl maleate-vinyl alcohol copolymer, and so forth.

The vinyl chloride copolymers, into which the anionic functional group is introduced, also include, for example, copolymers each prepared by copolymerizing a vinyl chloride monomer, a copolymerizable monomer containing an alkali salt of sulfonic acid or phosphoric acid, and, if required, the other copolymerizable monomers.

The copolymers are prepared through a vinyl polymerization. Therefore, the synthesization may readily be made and the components for copolymerization may variously be selected. Further, the characteristics of copolymers may desirably be controlled.

The metals of the salts of sulfonic acid or phosphoric acid are alkali metals including, preferably, sodium, potassium, and lithium and, particularly, potassium from the viewpoints of its dissolvability, reactivity, yield, and so forth.

The polymerizable monomers containing sulfonic acid salts include, for example,

CH₂=CHSO₃M,

CH₂=CHCH₂SO₃M,

CH₂=C(CH₃)CH₂SO₃M,

CH₂=CHCH₂OCOCH(CH₂COOR)SO₃M,

CH₂=CHCH₂OCH₂CH(OH)CH₂SO₃M,

CH₂=C(CH₃)COOC₂H₄SO₃M,

CH₂=CHCOOC₄H₈SO₃M,

CH₂=CHC)NHC(CH₃)₂CH₂SO₃M,

and so forth.

The phosphoric acid salts include, for example,

CH₂=CHCH₂OCH₂CH(OH)CH₂O-PO₃M³Y¹,

CH₂=CHCONHC(CH₃)₂CH₂-O-PO₃M³Y²,

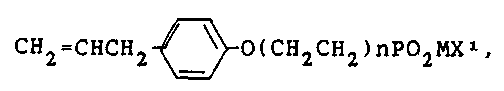

and

CH₂=CHCH₂O(CH₂CH₂O)mPOMX²

wherein M represents an alkali metal; R represents an alkyl group having 1 to 20 carbon atoms; Y¹ represents one of a hydrogen atom, M, and CH₂=CHCH₂OCH₂CH(OH)CH₂; Y² represents one of a hydrogen atom, M, and CH₂CH=CONHC(CH₃)₂CH₂-; X¹ represents one of 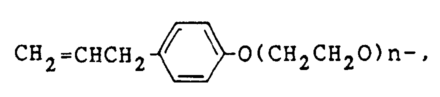 OH, and OM; X² represents one of CH₂=CHCH₂O(CH₂CH₂O)m-, OH, and OM; and m and n are each an integer of 1 to 100.

The copolymerizable monomers which are to be polymerized if required include, for example, various vinyl esters, vinylidene chloride, acrylonitrile, methacrylonitrile, styrene, acrylic acid, methacrylic acid, various acrylic acid esters, methacrylic acid esters, ethylene, propylene, isobutene, butadiene, isoprene, vinyl ether, aryl ether, aryl ester, acrylamide, methacrylamide, maleic acid, maleic acid ester, and so forth.

The copolymers may be polymerized in a polymerizing method selected from those of emulsion polymerization, solution-polymerization, suspension-polymerization, block-polymerization, and so forth. To any of the above-given methods, a molecular weight regulator, a polymerization initiator, and the well-known techniques such as those for partial or continuous addition of monomers may be applied.

It is preferable that the copolymers further contain an epoxy or hydroxyl group.

In the meantime, the conventional vinyl chloride copolymers have been the copolymers of monomer units such as those given below. 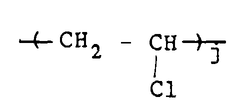 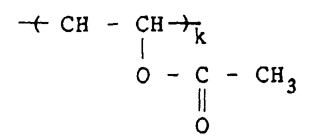 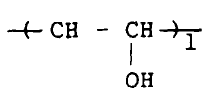 wherein j, k and l are each an integer.

In the conventional vinyl chloride copolymers, it may however be considered that a CH₃CO-O- group can hardly contribute to a cross linkage reaction with a hardener or the like.

In the invention, it is, therefore, preferable to contain an epoxy group such as those given below in place of CH₃CO.

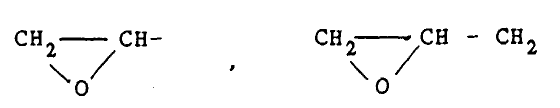

To be more concrete, the resins having the following combination of units may be exemplified. 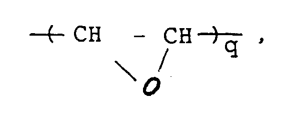 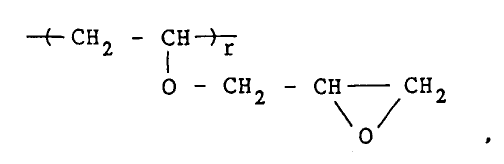 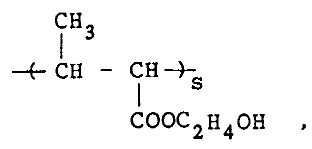 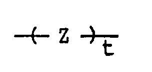 wherein q, r, s, and t are each an integer; and Z represents a monomer unit containing the alkali metal salt of a sulfo or phospho group.

The molecular weight of the above-mentioned resin (A) is within the range of, usually, 5000 to 80000 and, preferably, 10000 to 30000. If a molecular weight exceeds 80000, there may be some instances where the friction coefficient of a magnetic layer may be increased when a magnetic recording medium is prepared because the viscosity of a magnetic paint becomes higher than the permitted limit, and the workability in production may be worsened. On the other hand, if a molecular weight is less than 5000, there may be some instances where the physical properties of a coated layer may be deteriorated, because some portions of the magnetic paint may remain unreacted in the course from the step where the magnetic paint is coated on a non-magnetic support of which will be detailed later to the step where the coated paint is hardened with a hardener, so that a low molecular weight component may be left.

The ferromagnetic powder include, for example, Co-containing iron oxide magnetic powder, iron oxide magnetic powder, Fe-Al alloy powder, Fe-Al-P alloy powder, Fe-Ni-Co alloy powder, Fe-Mn-Zn alloy powder, Fe-Ni-Zn alloy powder, Fe-Co-Ni-Cr alloy powder, Fe-Co-Ni-P alloy powder, Co-Ni alloy powder, Co-P alloy powder, and so forth; and ferromagnetic alloy powder principally comprising a ferromagnetic metal such as Fe, Ni, or Co.

Among them, Co-containing iron oxide magnetic powder is preferable.

The Co-containing iron oxide magnetic powder include, for example, Co-containing γ-Fe₂O₃ powder, Co-containing Fe₃O₄ powder, Co-containing FeOx (4/3<x<3/2) powder, and so forth.

The specific surface area of the ferromagnetic powder measured in a BET method is not smaller than 20 m²/g and, preferably, within the range of 20 to 80 m²/g.

If a specific surface area is smaller than 20 m²/g, there may be some instances where the S/N ratio of a magnetic recording medium may be lowered.

There is no special limitation to the shapes of the ferromagnetic powder. Therefore, those in the shape of a needle, sphere, spindle, or the like may be used.

Now, the proportion of compounding the carbon black, the resin (A), and the ferromagnetic powder will be detailed.

The compounding proportion of the 1st and 2nd carbon black is within the range of, usually, 0.1 to 20 parts by weight and, preferably, 0.2 to 10 parts by weight per 100 parts by weight of the ferromagnetic powder to be used.

If a compounding proportion of the 1st and 2nd carbon black is less than 0.1 parts by weight, there may be some instances where the static preventability and running durability of a magnetic recording medium may be lowered together. If exceeding 20 parts by weight, the electromagnetic conversion characteristics may be lowered.

The compounding proportion of the resin (A) is within the range of, usually, 5 to 30 parts by weight and, preferably, 5 to 20 parts by weight per 100 parts by weight of the ferromagnetic powder to be used.

When the compounding proportions are adjusted to be within the above-mentioned ranges, it is possible to make excellent the dispersed state of the ferromagnetic powder in a magnetic layer and, at the same time, to improve the dispersion rate thereof.

Besides the binders each having the anionic functional group, resins each having an average molecular weight within the range of about 10000 to 2000000 may also suitably be used as the binders.

To be more concrete, these resins include, for example, urethane polymers, vinyl chloride-vinyl acetate copolymers, vinyl chloride-vinylidene chloride copolymers, vinyl chloride-acrylonitrile copolymers, butadiene-acrylonitrile copolymers, polyamide resins, polyvinyl butyral, cellulose derivatives such as cellulose acetatebutyrate, cellulose diacetate, cellulose propionate, nitrocellulose, and so forth, styrene-butadiene copolymers, polyester resins, various kinds of synthetic-rubber type binders, phenol resins, epoxy resins, urea resins, melamine resins, silicone resins, acrylic reactive resins, mixtures of a high molecular polyester resin and an isocyanate prepolmer, the mixtures of a polyester polyol and a polyisocyanate, ures formaldehyde resins, the mixtures of a low molecular glycol and a high molecular diol compound, the mixtures thereof, and so forth.

Among the above-given resins, urethane polymers, vinyl chloride resins, and polyester resins may preferably be used.

In this invention, the durability of a magnetic layer may be improved when adding a polyisocyanate type hardener together with the above-given resins into a binder.

As for the polyisocyanate hardeners, any of the following ones may be used. Namely, the conventional hardeners having so far been used, including, bifunctional isocyanates such as tolylene diisocyanate, diphenylmethane diisocyanate, hexane diisocyanate, and so forth; trifunctional isocyanates such as Colonate^{R} L under the trade name of and manufactured by Japan Polyurethane Industrial Co., Ltd.. Desmodur^{R} L under the trade name of and manufactured by Bayer AG., and so forth; urethane prepolymers containing isocyanate groups each in the terminals; and so forth; and any polyisocyanates which may be used for such hardeners.

The hardeners each may usually be used in an amount within the range of 5 to 80 parts by weight to the total amount of binders used.

In a magnetic layer, the compounding proportion of the ferromagnetic powder to the binder is usually 1 to 200 and preferably 1 to 50 parts by weight of the binder to 100 parts by weight of the ferromagnetic powder. If the binder is compounded excessively, there may be some instances where the recording density of a magnetic recording medium may be lowered because an amount of the ferromagnetic powder is resultingly diminished. If in short, the running durability of the magnetic recording medium may be deteriorated because the strength of the magnetic layer is lowered.

The magnetic recording media of the invention are also allowed to contain an abrasive and an antistatic agent other than carbon black, as well as the 1st and 2nd carbon black, ferromagnetic powder, binder, and hardener, provided that the objects of the invention shall not be affected.

The magnetic recording media of the invention includes as a lubricant, a fatty acid and a fatty acid ester.

When using both of the fatty acid and the fatty acid ester in combination, it is possible to offset the defects caused in independent use thereof by displaying the characteristics of the two of these lubricants and to improve the lubrication effects, so that a still-image durability, a running stability, a S/N ratio, and so forth is enhanced. The fatty acid is added in an amount within the range of 0.2 to 10 parts by weight to 100 parts by weight of the ferromagnetic powder used and, preferably, 0.3 to 8.0 parts by weight. If the fatty acid is added in an amount of less than 0.2 parts by weight, the runnability of the medium used is deteriorated because the dispersibility of the ferromagnetic powder is lowered. On the other hand, if exceeding 10 parts by weight, the fatty acid may be oozed or an output may be lowered. The fatty acid ester is added in an amount within the range of, 0.1 to 10 parts by weight to 100 parts by weight of the ferromagnetic powder used and, preferably, 0.2 to 8.5 parts by weight. If the fatty acid ester is added in an amount of less than 0.1 parts by weight, the still durability is not be satisfied. On the other hand, if exceeding 10 parts by weight, the fatty acid ester may be oozed or an output may be lowered.

For displaying the above-mentioned effects more excellently, it is preferred that the proportion by weight of the fatty acid to the fatty acid ester (fatty acid / fatty acid ester) is within the range of 10/90 to 90/10. In addition, the fatty acid may be able to display the effect of a dispersing function. It may, therefore, be presumed that an amount of other dispersant having a lower molecular weight may be reduced by using the fatty acid and the Young's modulus of the magnetic recording medium used may be improved as much.

The fatty acids may be either monobasic or dibasic.

The fatty acids include those having carbon atoms within the range of, preferably, 6 to 30 in number and, more preferably, 12 to 22. To be more concrete, they include, for example, caproic acid, caprylic acid, capric acid, lauric acid, myristic acid, palmitic acid, stearic acid, isostearic acid, linolenic acid, linolic acid, oleic acid, elaidic acid, behenic acid, malonic acid, succinic acid, maleic acid, glutaric acid, adipic acid, pimelic acid, azelaic acid, sebacic acid, 1,12-dodecanedicarboxylic acid, octanedicarboxylic acid, and so forth.

The fatty acid esters include, for example, oleyl oleate, isocetyl stearate, dioleyl maleate, butyl stearate, butyl palmitate, butyl myristate, octyl palmitate, amyl palmitate, isobutyl oleate, stearyl stearate, lauryl oleate, octyl oleate, isobutyl oleate, 2-ethylhexyl stearate, ethyl stearate, 2-ethylhexyl palmitate, isopropyl palmitate, isopropyl myristate, butyl laurate, cetyl-2-ethyl hexarate, dioleyl adipate, diethyl adipate, diisobutyl adipate, diisobutyl adipate, diisodecyl adipate, and so forth.

Besides the fatty acids and fatty acid esters, other lubricants may be used in this invention. Namely, silicone oil including those modified with carboxylic acid or esters, graphite, fluorocarbon, molybdenum disulfide, tungsten disulfide, fatty acid amide, α-olefin oxide, and so forth.

These may be used independently or in combination.

The lubricants may be used usually in an amount within the range of 0.05 to 10 parts by weight to 100 parts by weight of the ferromagnetic powder.

The abrasives include, for example, inorganic powder such as those of aluminium oxide, titanium oxide TiO or TiO₂, α-iron oxide, silicon oxide SiO or SiO₂, silicon carbide, cerium oxide, magnesium oxide, silicon nitride, zirconium oxide, chromium oxide, boron carbide, or the like; and organic powder such as those of benzoguanamine resin, melamine resin, phthalocyanine compound, or the like.

Among them, preferable one is aluminium oxide.

The average particle-size of the abrasives is usually within the range of 0.01 to 1.0µm.

The amount of these abrasives to be compounded is usually within the range of 0.5 to 20 parts by weight to 100 parts by weight of the ferromagnetic powder used.

The antistatic agents other than the 1st and 2nd carbon black include, for example, electroconductive powder such as those of graphite, a tin oxide-antimony oxide type compound, a tin oxide-titanium oxide-antimony oxide type compound, a carbon black graft polymer, or the like; natural surfactants such as saponin or the like; nonionic surfactants such as those of the alkylene oxide, glycerol, glycidol, or the like; cationic surfactants such as those of higher alkylamines, quaternary pyridine and other heterocyclic compound, phosphoniums, sulfoniums, or the like; anionic surfactants containing an acid group such as a carboxylic acid group, a sulfonic acid group, a phosphoric acid group, a sulfuric acid ester group, a phosphoric acid ester group, or the like; amphoteric surfactants such as those of a sulfuric or phosphoric acid ester of aminoalcohol, or the like; and so forth.

They may be used independently or in combination,

Antistatic agents may be compounded together with the 1st and 2nd carbon black usually in an aggregate proportion within the range of 0.1 to 20 parts by weight to 100 parts by weight of the ferromagnetic powder used.

The lubricants, antistatic agents, dispersing agents or the like of which will be detailed later each have not only their independent functions but also the other functions. For example, one of these compounds sometimes functions as a lubricant and an antistatic agent.

In the invention, the above-mentioned classifications cover only the principal functions of the compounds. It is, therefore, to be understood that the functions of the classified compounds shall not be limited to the functions classified above.

The magnetic recording media of the invention are each comprised of a non-magnetic support bearing thereon the magnetic layer about which will be detailed later.

From the viewpoint that electromagnetic conversion characteristics are excellent in the invention, the magnetic layer is less than 0.010µm in surface roughness Ra and more prepferably be within the range of 0.007 to 0.010µm.

If the surface roughness Ra exceeds 0.010µm, the electrical characteristics will be deteriorated.

The term, surface roughness Ra, herein means an average roughness on a center line.

The surface roughness Ra may be obtained by measuring 2.5 mm in length of a sample surface, i.e., a magnetic layer surface, with a three-dimensional roughness tester, Model SE-3FK manufactured by Kosaka Laboratories, Inc., having a cut-off of 0.25 and a stylus pressure of 30 mg.

A desired surface roughness Ra of a magnetic layer can be obtained by suitably selecting the conditions of temperatures and pressures for a calender treatment and the number of the treatments, the surface roughness of a non-magnetic support, the conditions for dispersing ferromagnetic powder such as a period of time for preparing a magnetic paint. Next, a back-coat layer will be detailed.

### Back-coat layer

A back-coat layer is provided with the purpose of improving the running durability of a magnetic recording medium of the invention. This layer is provided in such a manner that a magnetic paint which was prepared by dispersing at least a carbon black into a binder is coated on one surface of a non-magnetic support opposite to the other surface thereof provided with a magnetic layer.

In the back-coat layer, the carbon black functions to prevent the magnetic layer from generating static for one thing and to keep light shielding property and running durability for another.

In the invention, it is preferable that the back-coat layer is to contain the carbon black having an average particle-size within the range of 30 to 150 nm (mµ).

To be more concrete, the 3rd carbon black include, for example, the following ones, namely,

Trade name: Laven^{R} 14, 16, 22, 410, 420, 430, 450
Manufactured by Columbia Carbon Company, and

Trade name: Sterling^{R} NS, V
Manufactured by Cabbot Company

As for the binders, the binders similar to those applied to the magnetic layer may suitably be used.

It is also allowed that such binders may contain a lubricant and an antistatic agent other than carbon black each similar to those used in the magnetic layer, and the following organic or inorganic filler, provided the objects of the invention shall not be affected.

The organic filler include, for example, an acrylstyrene resin, a benzoguanamine resin powder, a melamine resin powder, a phthalocyanine pigment, a polyester resin powder, a polyamide resin powder, a polyimide resin powder, a polyfluoroethylene resin powder, and so forth.

In particular, the benzoguanamine and/or melamine resin powder are preferable to be used with carbon black in combination.

The inorganic filler include, for example, silicon oxide, titanium oxide, aluminium oxide, zinc oxide, calcium carbonate, zinc sulfate, tin oxide, chromium oxide, silicon carbide, calcium carbide, α-Fe₂O₃, talc, kaolin, boron nitride, zinc fluoride, and molybdenum dioxide.

Among them, zinc oxide is preferable.

In a back-coat layer of the invention, the surface roughness Ra thereof should preferably be not less than 0.015µm and, more preferably, within the range of 0.015 to 0.035µm.

If the surface roughness Ra is less than 0.015µm, not only any excellent runnability cannot be obtained, but electromagnetic conversion characteristics and running durability may be lowered.

The meaning of the surface roughness Ra and the measurement method thereof are the same as in the magnetic layer.

A desired surface roughness Ra of a back-coat layer can be obtained by suitably selecting a thickness of the back-coat layer, the conditions of temperatures and pressures for a calender treatment, the number of the treatments, and so forth.

A thickness of the back-coat layer is within the range of, usually, 0.1 to 5.0µm and, preferably, 0.2 to 3.0µm.

Next, a non-magnetic support provided thereon with the magnetic layer and back-coat layer will be detailed.

### Non-magnetic support

The raw materials for preparing the non-magnetic support include, for example, polyesters such as polyethyleneterephthalate, polyethylene-2,6-naphthalate and so forth; polyolefins such as polypropylene and so forth; cellulose derivatives such as cellulose triacetate, cellulose diacetate and so forth; and plastics such as polycarbonate and so forth.

The preferably raw materials among them include polyethyleneterephthalate.

There is no special limitation to the shapes of the above-mentioned non-magnetic supports, but they may be in any shapes such as those of a tape, a sheet, and so forth.

When the non-magnetic support is in the shape of a tape or sheet for example, the thickness thereof is within the range of, usually, 3 to 100µm and, preferably, 5 to 50µm.

Next, the preparation method of a magnetic recording medium relating to the invention will be detailed.

### The preparation and so forth

The preparation method of a magnetic recording medium of the invention comprises the following two processes; namely, one process wherein a magnetic paint is prepared by dispersing with kneading the magnetic layer forming components such as the above-mentioned ferromagnetic powder, binder and so forth into a solvent, and the resulting magnetic paint is coated on one side of the above-mentioned non-magnetic support, and dried; and the other process wherein a back-coating paint is prepared by dispersing with kneading the back-coat layer forming components such as the ferromagnetic powder, binder and so forth into a solvent, and the resulting back-coating paint is coated on the other side of the non-magnetic support, and dried.

The solvents which are to be used for kneading and dispersing the magnetic layer forming components include, for example, ketone solvents such as those of acetone, methylethyl ketone (MEK), methylisobutyl ketone (MIBK), cyclohexanone, and so forth; alcohol solvents such as those of methanol, ethanol, propanol, butanol, and so forth; ester solvents such as those of methyl acetate, ethyl acetate, butyl acetate, ethyl lactate, propyl acetate, ethyleneglycol monoacetate, and so forth; ether solvents such as those of diethyleneglycoldimethyl ether, 2-ethoxy ethanol, tetrahydrofuran, dioxane, and so forth; aromatic hydrocarbon solvents such as those of benzene, toluene, xylene, and so forth; halogenohydrocarbon solvents such as those of methylene chloride, ethylene chloride, carbon tetrachloride, chloroform, ethylenechlorohydrin, dichlorobenzene, and so forth.

When kneading to compose the magnetic paint components, the above-mentioned carbon black, ferromagnetic powder, and other magnetic paint components are put into a keading machine at the same time or one after another. In other words, the magnetic powder is added into a solvent containing a dispersant and the mixture is kneaded for a certain period of time. Then, each of the remaining components is added into the kneaded matter and is further kept kneading so as to obtain the magnetic paint.

When kneading and dispersing the above components, a variety of kneading machines may be used. These machines include, for example, adouble-roll mill, triple-roll mill, ball mill, pebble mill, side grinder, Sqegvari's attriter, high-speed impeller dispersing machine, high-speed stone mill, high-speed impact mill, disper-kneader, high-speed mixer, homogenizer, supersonic dispersing machine, and so forth.

When kneading and dispersing the carbon black and ferromagnetic powder, a dispersant may be used.

Such dispersants include, for example, lecithin, phosphoric acid esters, amine compounds, alkyl sulfates, fatty acid amides, higher alcohol, polyethylene oxide, sulfosuccinic acid, sulfosuccinic acid esters, publicly known surfactants and the salts thereof, the salts of the dispersants comprising an anionic organic-group such as -COOH or -PO₃H, and so forth.

These dispersants may be used independently or in combination.

The dispersant may be added usually in an amount within the range of 0.1 to 10 parts by weight to 100 parts by weight of the ferromagnetic powder.

The solution of coating the magnetic layer forming components thus prepared is coated onto one side of a non-magnetic support in a well-known method.

The above-mentioned back-coat layer forming components may also be prepared in the same manner as in the magnetic layer forming components.. The solution of coating the back-coat layer forming components is coated onto the other side of the non-magnetic support in a well-known method.

The coating methods applicable to the invention include, for example, a gravure-roll coating, wire-bar coating, doctor-blade coating, reverse-roll coating, dip coating, air-knife coating, calender coating, squeeze coating, kiss coating, fountain coating, and so forth.

The thickness of the magnetic layer thus coated is usually within the range of 0.5 to 20µm in dried thickness.

After the magnetic layer forming components are coated and when they are in the undried state, a magnetic field orientation is treated, if required, at 0.05 to 0.3 Tesla (500 to 3000 Gauss) for example and, further, a surface smoothing treatment is subjected usually by means of a supercalender roll.

Then, a magnetic recording medium may be obtained by cutting into a desired shape.

The magnetic recording media of the invention can be used for magnetic tapes such as video tapes, audio tapes and so forth, when they are cut into the shape of a long strip, for example.

According to the invention,
(1) It is possible to perform a high density recording operation, because the invention can enhance the dispersibility of ferromagnetic powder which is intrinsically endowed with high cohesion, ferromagnetized and finely grained, and the magnetic and electromagnetic conversion characteristics can also be excellent thereby;
(2) It is possible to provide a high performance magnetic recording medium having various advantages such as an excellent running durability and so forth, when making use of carbon blacks which have the intrinsic characteristics such as excellent light-shielding and antistatic properties and, in addition, specific particle-sizes; and
(3) It is possible to reduce edge damages and so forth from magnetic recording media by providing a back-coat layer, which contains carbon black having a specific particle-size and having a specific surface roughness Ra, onto one side of a non-magnetic support opposite to the other side thereof whereto a magnetic layer is provided, so that the running durability of the magnetic recording media can further be improved.

### Examples

Now, referring to the following examples of the invention and comparative examples thereto, the invention will be more detailed. In these descriptions thereof, the term, part(s), means part(s) by weight.

### Example 1

The following magnetic layer composites were mixed and dispersed together for three hours by means of a sand mill. To the resulting dispersed solution, 5 parts of polyisocyanate compound was added and mixed together, so that a magnetic paint was prepared.

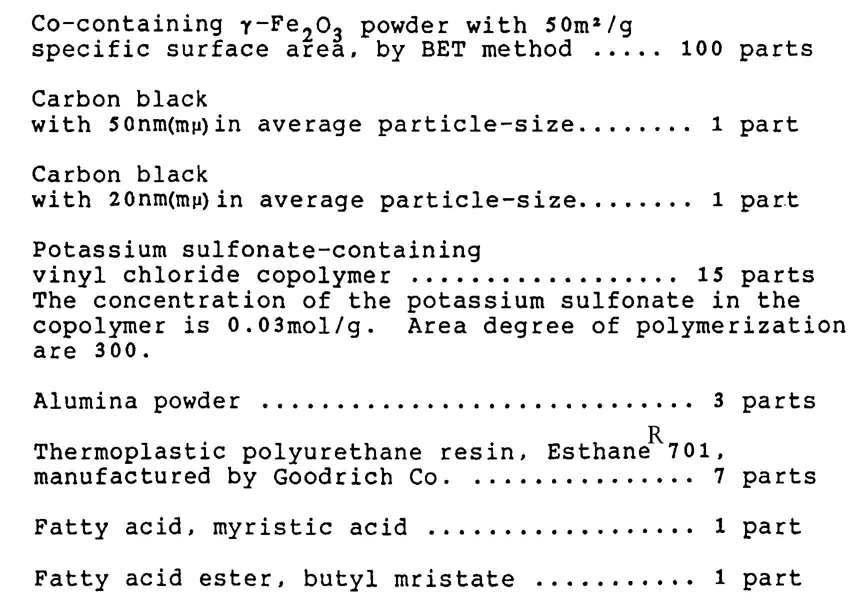

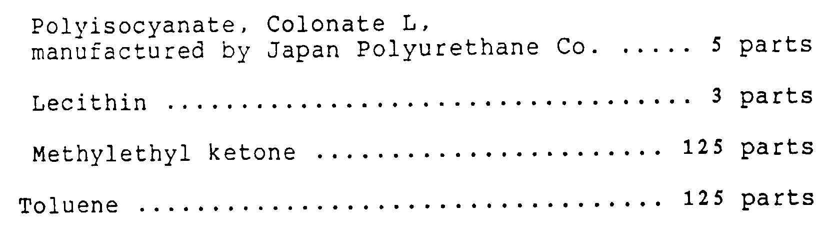

The resulting magnetic paint was coated to be 4µm in dried thickness on a 15µm-thick polyethyleneterephthalate film.

After removing the solvents with-heating, the coated film was subjected to a calender treatment and then to a surface smoothing treatment under the conditions of a temperature of 60 to 80°C and a pressure of 100 to 300kg/cm². The coated film thus treated was cut in a desired width, so that a video-tape was prepared.

The surface roughness (Ra) of the resulting magnetic layer was 0.01µm.

Various characteristics of the resulting video-tape were measured and evaluated. The results thereof are shown in Table 1.

Such characteristics were measured in the following manners.

Squareness ratio:
In a magnetic field of 795 770 A/cm (10K Oe), the ratio, Bm/Br, of a residual magnetic flux density Br to a saturated magnetic flux density Bm was measured by means of a VSM.

RF output:
The output of the resulting tape regenerated by a 100% white signal was obtained by comparing it to that of the tape of Example 2 which was standardized as the control sample.

Lumi-S/N:
In comparison with a control tape manufactured by Konica Corporation, the difference of the S/N ratios between the control tape and the resulting sample tape of this Example 1 was obtained when 100% white signals were each applied to them, by means of a noise-meter manufactured by Shiba-Soku Co.

Chroma-S/N:
In comparison with a control tape manufactured by Konica Corporation, the difference of the S/N ratios between the control tape and the resulting sample tape of this Example 1 was obtained when chroma signals were each applied to them, by means of a noise-meter manufactured by Shiba-Soku Co.

Running durability:
The resulting video-tape was kept running for 100 hours by means of HR-S7000 manufactured by Japan Victor Co. and the occurrence of edge-damages was observed and evaluated.

In Table 1, the meanings of the marks are as follows:
No edge-damage found A
Some edge-damages found B
Edge-damages found overall C

The results thereof are shown in Table 1.

### Example 2

Video-tapes were each prepared in the same manner as in the above-described Example 1, except that, among the composites of the magnetic paint unsed in Example 1, carbon black having an average particle-size of 50 nm (mµ) was replaced by that having an average particle-size of 60 nm (mµ), that of 20 nm (mµ) by that of 27nm (mµ), respectively. The various characteristics of the resulting video-tapes were measured and evaluated.

The results thereof are shown in Table 1.

### Example 3

A video-tape was prepared in the same manner as in Example 1, except that the magnetic layer surface smoothing treatment carried out once in Example 1 was made twice, and the evaluation was made in the same manner as in Example 1.

The surface roughness Ra of the resulting magnetic layer was 0.009µm.

The various characteristics of the resulting video-tape were measured and evaluated in the same manner as in Example.

The results thereof are shown in Table-1.

### Example 4

### a) Magnetic layer formation

A magnetic paint was prepared in the same manner as in Example 1 and, using the magnetic paint, a video-tape was prepared in the same conditions as in Example 1.

The surface roughness (Ra) of the resulting magnetic layer was 0.009µm.

### b) Back-coat layer formation

The back-coat layer composites having the following composition were mixed well by means of a ball-mill, and 5 parts of polyfunctional isocyanate, Colonate L, manufactured by Japan Polyurethane Co. was further added thereto. Then, the resulting matter was filtrated through a filter having an average mesh-size of 1.5µm, so that a paint for back-coat layers was prepared.

| | |
|---|---|
| Carbon black (Average particle size: 70nm) | 100 parts |
| Urethane elastomer, Estan^{R} 5701 manufactured by Goodrich Co. | 35 parts |
| | |
| Nitrocellulose, Celnova^{R} BTH 1/2 manufactured by Asahi Chemical Industries Co. | 35 parts |
| Methylethyl ketone | 300 parts |
| Toluene | 200 parts |

The resulting paint for back-coat layers was coated to be 11µm in dried thickness on the rear surface, i.e., the surface opposite to the magnetic layer, of the magnetic film prepared in the manner described in the above paragraph a) Magnetic layer formation.

Next, the remaining solvents were removed with heating, so that a back-coat layer was obtained.

The surface roughness (Ra) of the resulting back-coat layer was 0.027µm.

The resulting film was cut into 1/2 inch wide, so that a video-tape was prepared.

The various characteristics of the resulting video-tape were measured and evaluated.

The results thereof are shown in Table 1.

### Comparative Examples

### Comparative Example 1

A video-tape was prepared in the same manner as in Example 1, except that, among the composites of the magnetic paint used in Example 1, carbon black having an average particle-size of 50 nm (mµ) was not used. The various characteristics of the resulting video-tape were measured and evaluated.

The results thereof are shown in Table 1.

### Comparative Example 2

A video-tape was prepared in the same manner as in Example 1, except that, among the composites of the magnetic paint used in Example 1, carbon black having an average particle-size of 20 nm (mµ) was not used. The various characteristics of the resulting video-tape were measured and evaluated.

The results thereof are shown in Table 1.

### Comparative Example 3

A video-tape was prepared in the same manner as in Example 1, except that, among the composites of the magnetic paint used in Example 1, potassium sulfonate-containing vinyl chloride copolymer was replaced by VAGH manufactured by Union Carbide Co. The various characteristics of the resulting video-tape were measured and evaluated.

The results thereof are shown in Table 1.

**Table 1**

| | Magnetic property | Runningity durability | Electromagnetic conversion characteristics | | |
|---|---|---|---|---|---|
| | Squareness ratio (Br/Bm) | | RF output (dB) | Lumi-S/N (dB) | Chroma-S/N (dB) |
| Example 1 | 0.83 | A | +2.4 | +2.2 | +0.8 |
| Example 2 | 0.83 | A | +2.3 | +2.2 | +0.9 |
| Example 3 | 0.83 | B | +2.7 | +2.5 | +1.2 |
| Example 4 | 0.83 | A | +2.6 | +2.5 | +1.1 |
| Comparative Example 1 | 0.84 | C | +2.3 | +2.3 | +1.0 |
| Comparative Example 2 | 0.83 | B | +2.2 | +2.1 | +0.9 |
| Comparative Example 3 | 0.76 | B | +1.2 | +1.0 | +0.3 |

### Evaluation

As is obvious from Table 1, it is found in the invention that the running durability, magnetic property, and electromagnetic characteristics are overall excellent, because the magnetic layer contains carbon black having a specific average particle-size and the binder contains an anionic functional group.

## Claims

1. A magnetic recording medium comprising a non-magnetic support having thereon a magnetic layer having a surface roughness (Ra) of not more than 0.01 µm and being comprised of a ferromagnetic powder, a first carbon black having an average particle size of 15 to 30 nm, a second carbon black having an average particle size of not less than 40 nm, a binder having an anionic functional group, a fatty acid in an amount of from 0.2 to 10 parts by weight and a fatty acid ester in an amount of from 0.1 to 10 parts by weight each per 100 parts by weight of the ferromagnetic powder.

2. The magnetic recording medium of claim 1, wherein the amount of said fatty acid is from 0.3 to 8.0 parts by weight and the amount of said fatty acid ester is from 0.2 to 8.5 parts by weight each per 100 parts by weight of the ferromagnetic powder.

3. The magnetic recording medium of claim 1 or 2, wherein said magnetic recording medium has a back-coat layer said back-coat layer containing a carbon black and having a surface roughness (Ra) which is not less than 0.015 µm.

4. The magnetic recording medium of claim 3, wherein the average particle size of said carbon black in the back-coat layer is within the range of from 30 to 150 nm.

5. The magnetic recording medium of claim 4, wherein the average particle size of said carbon black in the back-coat layer is within the range of from 50 to 100 nm and the surface roughness (Ra) of said back-coat layer is within the range of from 0.015 to 0.035 µm.

6. The magnetic recording medium of any of claims 1 to 5, wherein the weight ratio of said first carbon black to said second carbon black is within the range of from 10/1 to 1/10.

7. The magnetic recording medium of any of claims 1 to 6, wherein said binder comprises at least one polymer selected from a vinyl chloride copolymer, a polyester and a polyurethan, each having said anionic functional group.

8. The magnetic recording medium of claim 7, wherein said binder is a vinyl chloride copolymer having an anionic functional group.

9. The magnetic recording medium of claim 8, wherein said vinyl chloride copolymer is at least one polymer selected from a vinyl chloride-vinyl acetate-vinyl alcohol copolymer, a vinyl chloride-vinyl propionate-vinyl alcohol copolymer, a vinyl chloride-vinyl acetate-vinyl maleate-vinyl alcohol copolymer and a vinyl chloride-vinyl propionate-vinyl maleate-vinyl alcohol copolymer.

10. The magnetic recording medium of any of claims 1 to 9, wherein said anionic functional group is -SO₃M, -OSO₂M, -COOM or 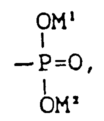 wherein M represents a hydrogen atom, a lithium atom, a potassium atom or a sodium atom; and M¹ and M² which may be the same or different each represent a hydrogen atom, a lithium atom, a potassium atom, a sodium atom and an alkyl group.

11. The magnetic recording medium of any of claims 7 to 10, wherein said vinyl chloride copolymer is comprised of a vinyl chloride monomer and an other copolymerizable monomer having a sulfonic acid group or a phosphoric group in the form of an alkali salt.

12. The magnetic recording medium of any of claims 1 to 11, wherein said vinyl chloride copolymer comprises an epoxy group or a hydroxy group together with an anionic functional group.

13. The magnetic recording medium of any of claims 1 to 12, wherein the molecular weight of said binder is within the range of from 5000 to 80000.

14. The magnetic recording medium of any of claims 1 to 13, wherein said ferromagnetic powder is a Co-containing iron oxide.

15. The magnetic recording medium of claim 14, wherein the specific surface area of said ferromagnetic powder is not less than 20 m²/g.

16. The magnetic recording medium of any of claims 1 to 15, wherein said first carbon black and said second carbon black are contained in said magnetic layer in an amount of from 0.1 to 20 parts per 100 parts by weight of said ferromagnetic powder.

17. The magnetic recording medium of any of claims 1 to 16, wherein said binder is contained in said magnetic layer in an amount of from 5 to 30 parts per 100 parts by weight of said ferromagnetic powder.

18. The magnetic recording medium of any of claims 1 to 17, wherein the surface roughness (Ra) of said magnetic layer is within the range of from 0.007 µm to 0.01 µm.

19. The magnetic recording medium of claim 3, wherein the surface roughness (Ra) of said back-coat layer is within the range of from 0.015 to 0.035 µm.

20. The magnetic recording medium of any of claims 1 to 19, wherein the surface roughness (Ra) of said back-coat layer is not less than 0.02 µm.

## Patentansprüche

1. Magnetisches Aufzeichnungsmedium, umfassend einen nichtmagnetischen Träger und darauf eine magnetische Schicht mit einer Oberflächenrauhigkeit (Ra) von nicht mehr als 0,01 µm, bestehend aus einem ferromagnetischen Pulver, einem ersten Ruß mit einer mittleren Partikelgröße von 15 bis 30 nm, einem zweiten Ruß mit einer mittleren Partikelgröße von nicht weniger als 40 nm, einem Binder mit einer anionischen funktionellen Gruppe, einer Fettsäure in einer Menge von 0,2 bis 10 Gewichtsteilen und einem Fettsäureester in einer Menge von 0,1 bis 10 Gewichtsteilen, jeweils pro 100 Gewichtsteile des ferromagnetischen Pulvers.

2. Das magnetische Aufzeichnungsmedium nach Anspruch 1, wobei die Menge der Fettsäure 0,3 bis 8,0 Gewichtsteile und die Menge des Fettsäureesters 0,2 bis 8,5 Gewichtsteile beträgt, jeweils pro 100 Gewichtsteile des ferromagnetischen Pulvers.

3. Das magnetische Aufzeichnungsmedium nmach Anspruch 1 oder 2, wobei das magnetische Aufzeichnungsmedium eine Rückseitenüberzugsschicht aufweist, wobei die Rückseitenüberzugsschicht einen Ruß enthält und eine Oberflächenrauhigkeit (Ra) aufweist, die nicht geringer ist als 0,015 µm.

4. Das magnetische Aufzeichnungsmedium nach Anspruch 3, wobei die mittlere Partikelgröße des Rußes in der Rückseitenüberzugsschicht im Bereich von 30 bis 150 nm liegt.

5. Das magnetische Aufzeichnungsmedium nach Anspruch 4, wobei die mittlere Partikelgröße des Rußes in der Rückseitenüberzugsschicht im Bereich von 50 bis 100 nm liegt und die Oberflächenrauhigkeit (Ra) der Rückseitenüberzugsschicht im Bereich von 0,015 bis 0,035 µm liegt.

6. Das magnetische Aufzeichnungsmedium nach einem der Ansprüche 1 bis 5, wobei das Gewichtsverhältnis des ersten Rußes zum zweiten Ruß im Bereich von 10/1 bis 1/10 liegt.

7. Das magnetische Aufzeichnungsmedium nach einem der Ansprüche 1 bis 6, wobei der Binder mindestens ein Polymer umfaßt, ausgewählt aus einem Vinylchloridcopolymer, einem Polyester und einem Polyurethan, welches jeweils die genannte anionische funktionelle Gruppe aufweist.

8. Das magnetische Aufzeichnungsmedium nach Anspruch 7, wobei der Binder ein Vinylchloridcopolymer mit einer anionischen funktionellen Gruppe ist.

9. Das magnetische Aufzeichnungsmedium nach Anspruch 8, wobei das Vinylchloridcopolymer mindestens ein Polymer ist, ausgewählt aus einem Vinylchlorid-Vinylacetat-Vinylalkoholcopolymer, einem Vinylchlorid-Vinylpropionat-Vinylalkoholcopolymer, einem Vinylchlorid-Vinylacetat-Vinylmaleat-Vinylalkoholcopolymer und einem Vinylchlorid-Vinylpropionat-Vinylmaleat-Vinylalkoholcopolymer.

10. Das magnetische Aufzeichnungsmedium nach den Ansprüchen 1 bis 9, wobei die anionische funktionelle Gruppe -SO₃M, -OSO₂M, -COOM oder 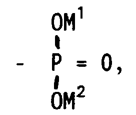 ist, wobei M ein Wasserstoffatom, eine Lithiumatom, ein Kaliumatom oder ein Natriumatom ist; und M¹ und M², die gleich oder verschieden sein können, jeweils ein Wasserstoffatom, ein Lithiumatom, ein Kaliumatom, ein Natriumatom und eine Alkylgruppe darstellen.

11. Das magnetische Aufzeichnungsmedium nach einem der Ansprüche 7 bis 10, wobei das Vinylchlorid-Copolymer aus einem Vinylchloridmonomer und einem anderen copolymerisierbaren Monomer mit einer Sulfonsäuregruppe oder einer Phosphorsäuregruppe in Form eines Alkalisalzes besteht.

12. Das magnetische Aufzeichnungsmedium nach einem der Ansprüche 1 bis 11, wobei das Vinylchlorid-Copolymer eine Epoxygruppe oder eine Hydroxygruppe zusammen mit einer anionischen funktionellen Gruppe umfaßt.

13. Das magnetische Aufzeichnungsmedium nach einem der Ansprüche 1 bis 12, wobei das Molekulargewicht des Binders im Bereich von 5000 bis 80000 liegt.

14. Das magnetische Aufzeichnungsmedium nach einem der Ansprüche 1 bis 13, wobei das ferromagnetische Pulver ein Co-enthaltendes Eisenoxid ist.

15. Das magnetische Aufzeichnungsmedium nach Anspruch 14, wobei die spezifische Oberfläche des ferromagnetischen Pulvers nicht geringer ist als 20 m²/g.

16. Das magnetische Aufzeichnungsmedium nach einem der Ansprüche 1 bis 15, wobei der erste Ruß und der zweite Ruß in der magnetischen Schicht in einer Menge von 0,1 bis 20 Teilen pro 100 Gewichtsteilen des ferromagnetischen Pulvers enthalten sind.

17. Das magnetische Aufzeichnungsmedium nach einem der Ansprüche 1 bis 16, wobei der Binder in der magnetischen Schicht in einer Menge von 5 bis 30 Teilen pro 100 Gewichtsteilen des ferromagnetischen Pulvers enthalten ist.

18. Das magnetische Aufzeichnungsmedium nach einem der Ansprüche 1 bis 17, wobei die Oberflächenrauhigkeit (Ra) der magnetischen Schicht im Bereich von 0,07 µm bis 0,01 µm liegt.

19. Das magnetische Aufzeichnungsmedium nach Anspruch 3, wobei die Oberflächenrauhigkeit (Ra) der Rückseitenüberzugsschicht im Bereich von 0,015 bis 0,035 µm liegt.

20. Das magnetische Aufzeichnungsmedium nach einem der Ansprüche 1 bis 19, wobei die Oberflächenrauhigkeit (Ra) der Rückseitenüberzugsschicht nicht geringer ist als 0,02 µm.

## Revendications

1. Un milieu d'enregistrement magnétique comprenant un support non magnétique qui porte une couche magnétique dont la rugosité superficielle (Ra) n'est pas supérieure à 0,01 µm et qui comprend une poudre ferromagnétique, un premier noir de carbone dont les dimensions moyennes des particules sont de 15 à 30 nm, un deuxième noir de carbone dont les dimensions moyennes de particules ne sont pas inférieures à 40 nm, un liant à groupe fonctionnel anionique, un acide gras selon une proportion de 0,2 à 10 parties en poids et un ester d'acide gras selon une proportion de 0,1 à 10 parties en poids chacun pour 100 parties en poids de la poudre ferromagnétique.

2. Le milieu d'enregistrement magnétique selon la revendication 1, dans lequel la proportion dudit acide gras est comprise entre 0,3 et 8,0 parties en poids et la proportion dudit ester d'acide gras est de 0,2 à 8,5 parties en poids, pour 100 parties en poids de la poudre ferromagnétique pour l'un et l'autre.

3. Le milieu d'enregistrement magnétique selon la revendication 1 ou 2, dans lequel ledit milieu d'enregistrement magnétique est pourvu d'une couche de revêtement arrière, ladite couche de revêtement arrière contenant un noir de carbone et étant d'une rugosité superficielle (Ra) qui n'est pas inférieure à 0,015 µm.

4. Le milieu d'enregistrement magnétique selon la revendication 3, dans lequel les dimensions moyennes des particules de noir de carbone de ladite couche de revêtement arrière sont dans la plage de 30 à 150 nm.

5. Le milieu d'enregistrement magnétique selon la revendication 4, dans lequel les dimensions moyennes de particules dudit noir de carbone de la couche de revêtement arrière sont comprises dans la plage de 50 à 100 nm et la rugosité superficielle (Ra) de ladite couche de revêtement arrière est comprise dans la plage de 0,015 à 0,35 µm.

6. Le milieu d'enregistrement magnétique selon l'une quelconque des revendications 1 à 5, dans lequel le rapport en poids entre ledit premier noir de carbone et ledit deuxième noir de carbone est dans une plage comprise entre 10/1 et 1/10.

7. Le milieu d'enregistrement magnétique selon l'une quelconque des revendications 1 à 6, dans lequel ledit liant comprend au moins un polymère sélectionné parmi un copolymère de chlorure de vinyle, un polyester et un polyuréthanne, pourvus chacun dudit groupe fonctionnel anionique.

8. Le milieu d'enregistrement magnétique selon la revendication 7, dans lequel ledit liant est un copolymère de chlorure de vinyle à groupe fonctionnel anionique.

9. Le milieu d'enregistrement selon la revendication 8, dans lequel ledit copolymère de chlorure de vinyle est au moins un polymère choisi parmi un copolymère de chlorure de vinyle, d'acétate de vinyle et d'alcool vinylique, un copolymère de chlorure de vinyle, de propionate de vinyle et d'alcool vinylique, un copolymère de chlorure de vinyle, d'acétate de vinyle, de maléate de vinyle et d'alcool vinylique et un copolymère de chlorure de vinyle, de propionate de vinyle, de maléate de vinyle et d'alcool vinylique.

10. Le milieu d'enregistrement magnétique selon l'une quelconque des revendications 1 à 9, dans lequel ledit groupe fonctionnel est -SO₃M, -OSO₂M, -COOM ou 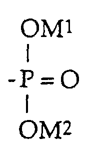 où M représente un atome d'hydrogène, un atome de lithium, un atome de potassium ou un atome de sodium; et M¹ et M² qui peuvent être identiques ou différents représentent chacun un atome d'hydrogène, un atome de lithium, un atome de potassium, un atome de sodium et un groupe alkyle.

11. Le milieu d'enregistrement selon l'une quelconque des revendications 7 à 10 dans lequel ledit copolymère de chlorure de vinyle est composé d'un monomère de chlorure de vinyle et d'un autre monomère copolymérisable à groupe acide sulfonique ou à groupe phosphorique sous forme d'un sel alcalin.

12. Le milieu d'enregistrement magnétique selon l'une quelconque des revendications 1 à 11, dans lequel ledit copolymère de chlorure de vinyle comprend un groupe époxy ou un groupe hydroxy ainsi qu'un groupe fonctionnel anionique.

13. Le milieu d'enregistrement magnétique selon l'une quelconque des revendications 1 à 12, dans lequel le poids moléculaire dudit liant est compris dans la plage de 5.000 à 80.000.

14. Le milieu d'enregistrement magnétique selon l'une quelconque des revendications 1 à 13, dans lequel ladite poudre ferromagnétique est un oxyde de fer contenant du Co.

15. Le milieu d'enregistrement magnétique selon la revendication 14, dans lequel la surface spécifique de ladite poudre ferromagnétique n'est pas inférieure à 20 m²/g.

16. Le milieu d'enregistrement magnétique selon l'une quelconque des revendications 1 à 15, dans lequel ledit premier noir de carbone et ledit deuxième noir de carbone sont contenus dans ladite couche magnétique selon une proportion comprise entre 0,1 et 20 parties pour 100 parties en poids de ladite poudre ferromagnétique.

17. Le milieu d'enregistrement magnétique selon l'une quelconque des revendications 1 à 16, dans lequel ledit liant est contenu dans ladite couche magnétique selon une proportion comprise entre 5 et 30 parties pour 100 parties en poids de ladite poudre ferromagnétique.

18. Le milieu d'enregistrement magnétique selon l'une quelconque des revendications 1 à 17, dans lequel la rugosité superficielle (Ra) de ladite couche magnétique est comprise dans la plage de 0,007 µm à 0,01 µm.

19. Le milieu d'enregistrement magnétique selon la revendication 3, dans lequel la rugosité spécifique (Ra) de ladite couche de revêtement arrière est comprise dans la plage de 0,015 à 0,035 µm.

20. Le milieu d'enregistrement magnétique selon l'une des revendications 1 à 19, dans lequel la rugosité superficielle (Ra) de ladite couche de revêtement arrière n'est pas inférieure à 0,02 µm.
